# EUROPÄISCHE PATENTSCHRIFT

(11) **EP 2 573 443 B1**
(45) Veröffentlichungstag und Bekanntmachung des Hinweises auf die Patenterteilung: **05.03.2014**
(21) Anmeldenummer: 11182117.9
(22) Anmeldetag: 21.09.2011
(51) Int. Cl.: F16L 59/02

(54) **Verfahren zur Isolation von Bauteilen mit einem flexiblen Isolationsmaterial**
Method for insulating components with a flexible insulation material
Procédé d'isolation de composants à l'aide d'un matériau isolant souple

(43) Veröffentlichungstag der Anmeldung: 27.03.2013
(73) Patentinhaber: ContiTech Elastomer-Beschichtungen GmbH, 30165 Hannover (DE)
(72) Erfinder: Storre, Jens, 37176 Nörten-Hardenberg (DE); Paulsen, Hans-Peter, 37079 Göttingen (DE); Papadimitriou, Alexander, 37154 Northeim (DE); Dette, Frank, 38315 Gielde (DE); Fleck, Andreas, 30827 Garbsen (DE); Witte, Hans-Hermann, 30657 Hannover (DE)
(74) Vertreter: Finger, Karsten

(56) Entgegenhaltungen:
- DE-U1- 7 732 727
- GB-A- 2 249 753
- US-A1- 2007 036 982
- US-A1- 2010 043 906

## Beschreibung

Die Erfindung betrifft ein Verfahren zur Isolation von Bauteilen mit einem flexiblen Isolationsmaterial auf der Basis einer hochtemperaturbeständigen Kautschukmischung, die zumindest teilweise unvernetzt und plastisch verformbar ist.

Für die thermische und/oder akustische Isolation von Bauteilen, insbesondere von Bauteilen mit komplexen Geometrien, sind nur wenige Lösungen auf dem Markt erhältlich, die auch bei Temperaturen von mehr als 130 °C einsetzbar sind. Üblicherweise werden zur Isolation von Bauteilen bei diesen hohen Temperaturen Mineralwollen eingesetzt, die zusätzlich mit einer Blech- oder Klebbandkaschierung versehen und damit stabilisiert werden. Derartige Isolationsmaterialien aus Mineralwolle mit Kaschierungen weisen folgende Nachteile auf: Die Montage bzw. Aufbringung auf das zu isolierende Bauteil und die Fixierung ist umständlich und daher teuer. Komplexe Bauteile (Formstücke) lassen sich auf Grund der geringen Flexibilität der Mineralwolle nur sehr schwer isolieren. Mineralwollen sind saugfähig, was bei Austritt von oder versehentlicher Benetzung mit Flüssigkeiten oder Bildung von Kondensat unter Umständen zum Verlust der Isolierwirkung und bei brennbaren Flüssigkeiten, wie z. B. Ölen, sogar zur Selbstentzündung führen kann. Bei der Aufbringung der Mineralwolle auf das zu isolierende Bauteil können außerdem Fasern und/oder Faserstaub frei werden, die bei längerer Exposition zu Krankheiten in den Atmungsorganen führen können.

Alternative Isolationsmaterialien auf der Basis von Polymeren, wie z. B. selbstblähende Dichtbänder oder vorgeformte Isolationsmaterialien auf der Basis von EPDM mit geschlossener Zellstruktur, sind in der Regel in ihrer Einsatztemperatur auf Bereiche von maximal 130 °C begrenzt.

In der GB 2 249 753 A wird ein flexibles, bahnenförmiges Material zur Wärmeisolierung z. B. von Schläuchen bei extrem hohen Temperaturen beschrieben, welches eine Lage aus einem ggf. geschäumten Silikonkautschuk und eine Metallfolie aufweist. Weitere Lagen aus Gewebe können vorgesehen werden. Die Silikonkautschuklage wird vor der Aufbringung auf das zu isolierende Bauteil stets vernetzt. Dabei wird die Kautschuklage üblicherweise als Paste oder Lösung aufgebracht, getrocknet und anschließend vernetzt. Durch die vorherige Vernetzung weist das Material in der Regel keine plastische Verformbarkeit mehr auf, da die Vernetzung (Vulkanisation) den Übergang des Elastomers vom plastischen in den elastischen Zustand bewirkt. Das Material kann sich daher nicht optimal an sehr komplexe Bauteilgeometrien anpassen und die gewünschte Position oft nicht beibehalten.

Seit kurzem ist ein hoch flexibles Isolationsmaterial auf der Basis einer hochtemperaturbeständigen Kautschukmischung auf dem Markt erhältlich, wobei die Kautschukmischung zumindest teilweise unvernetzt und plastisch verformbar ist. Unter "teilweise unvernetzt" ist dabei sowohl eine Kautschukmischung zu verstehen, die noch nicht verbrauchte Vernetzungschemikalien enthält, als auch eine Kautschukmischung, die mit wenig oder gar keinen Vernetzungschemikalien vernetzt ist, aber noch zumindest vernetzbare Polymerbestandteile aufweist. Dieses Material kann bei Temperaturen bis zu 250 °C eingesetzt werden und wird unter dem Namen Conti^{®} Thermo-Protect von der Firma ContiTech Elastomerbeschichtungen GmbH vertrieben. Das Material kann in Form von Bahnen oder Streifen um die zu isolierenden Bauteile herum gelegt/gewickelt und damit auf die zu isolierenden Bauteile appliziert werden.

Das Verfahren des Umwickelns von zu isolierenden Bauteilen mit einem bahnenförmigen Material ist aufwändig und zeitintensiv und die Oberfläche des umwickelten Bauteils ist uneben. Ferner bietet bahnenförmiges, flexibles Isolationsmaterial auch bei plastischer Verformbarkeit oft den Nachteil, dass Hinterschnitte an komplexen Bauteilen, wie Armaturen oder Ventilen, beim Aufwickeln des bahnenförmigen Materials nicht mit dem Isolationsmaterial ausgefüllt werden.

Der Erfindung liegt daher die Aufgabe zu Grunde, ein Verfahren zur Isolation von Bauteilen mit einem flexiblen Isolationsmaterial auf der Basis einer hochtemperaturbeständigen Kautschukmischung zur Verfügung zu stellen, welches schneller und effizienter durchgeführt werden kann und bei komplexen Bauteilen auch Hinterschnitte mit dem Material ausfüllt.

Gelöst wird diese Aufgabe erfindungsgemäß dadurch, dass das Isolationsmaterial auf das zu isolierende Bauteil durch Verpressen in einer Pressvorrichtung mit Hilfe einer Form aufgebracht wird.

Im Gegensatz zu Mineralwollen mit Kaschierung oder anderem bahnenförmigen Isolationsmaterial bietet das Verpressen in einer Pressvorrichtung mit Hilfe einer Form eine einfache und schnelle Methode auch komplizierte Bauteilgeometrien mit einem Isolationsmaterial zu versehen. Durch die Einwirkung von Druck beim Verpressen schmiegt sich das flexible Isolationsmaterial dicht an das Bauteil an und gelangt auch in Hinterschnitte. Es gelingt so, auch ganze Serien oder vorisolierte Bauteile schnell und kostengünstig herzustellen. Zusätzlich bietet sich der Vorteil, dass die Oberfläche des verpressten und isolierten Bauteils gemäß der verwendeten Form und in der Regel glatt ausgebildet ist. Eine Schindelung, wie sie beim Wickeln von bahnenförmigem Material auftritt, kann vermieden werden. Die Form kann dem Bauteil geometrisch ähnlich ausgebildet sein, um eine gleichmäßige Stärke des Isolationsmaterials zu erreichen. Es ist aber auch möglich, dass die Form andere Geometrien aufweist, beispielsweise die Form einer Kugel aus zwei Halbschalen hat. Derartige Formen sind dann universell einsetzbar.

Das flexible Isolationsmaterial auf der Basis einer hochtemperaturbeständigen Kautschukmischung, die zumindest teilweise unvernetzt und plastisch verformbar ist, wird bei dem Verfahren entweder zunächst auf das zu isolierende Bauteil aufgetragen, ähnlich dem Umhüllen des Bauteils mit Knete, wobei anschließend die Form um das Bauteil mit Isolationsmaterial gelegt und verpresst wird, oder die Form wird mit einer ausreichenden Menge an flexiblem Isolationsmaterial gefüllt und um das Bauteil gepresst.

Die Bauteile werden durch das erfindungsgemäße Verfahren sowohl thermisch als auch akustisch isoliert und gegenüber der Umgebung dynamisch entkoppelt. Wärmeverluste werden reduziert und das Bauteil weist einen Verbrennungsschutz bei Berührung auf.

Das Verfahren kann z. B. eingesetzt werden zur Isolation von Ventilen, Wärmetauschern oder Rohrleitungssystemen, die von heißen Medien, wie Öl, durchflossen werden.

Die Pressvorrichtung kann auf manuelle Weise betrieben werden. Dies bietet den Vorteil, dass das Verfahren unkompliziert an verschiedenen Orten eingesetzt werden kann. Eine Handpresse, in die Formen unterschiedlicher Art eingelegt werden können, ist dafür einsetzbar.

Alternativ dazu kann das Verfahren auch mit einer maschinellen Pressvorrichtung durchgeführt werden, beispielsweise mit einer Hydraulikpresse. Auf diese Weise können auch Isolationsmaterialien mit höherer Viskosität verarbeitet werden.

Die Pressvorrichtung kann stationär angeordnet sein, um z. B. Bauteile gleich beim Hersteller serienmäßig zu isolieren.

Alternativ dazu, kann es sich auch um eine mobile Pressvorrichtung handeln. Diese können z. B. dann zum Einsatz kommen, wenn Ventile oder Bögen von bereits existierenden Anlagen isoliert werden sollen.

Es ist möglich, dass die Form nach dem Verpressen mit der Pressvorrichtung am zu isolierenden Bauteil verbleibt. Es ist aber auch möglich, dass die Form mehrfach verwendet wird. Sie kann dabei zum einen in der Pressvorrichtung fest installiert sein oder nach dem Verpressen vom Isolationsmaterial als einzelne Form wieder abgelöst werden.

Bei dem erfindungsgemäßen Verfahren basiert das Isolationsmaterial auf einer hochtemperaturbeständigen Kautschukmischung, die zumindest teilweise unvernetzt und plastisch verformbar ist. Das Isolationsmaterial ist nach der Aufbringung also noch vernetzbar. Gemäß einer vorteilhaften Weiterbildung der Erfindung, kann das Isolationsmaterial nach dem Verpressen durch die Einwirkung von Wärmeenergie vernetzt bzw. weiter vernetzt werden, wobei die Wärmeenergie durch die Temperierung der Form und/oder des isolierten Bauteils eingetragen wird. Erfolgt der Energieeintrag durch das isolierte Bauteil, kann dies beispielsweise beim Durchströmen des Bauteils mit einem heißen Medium erfolgen. Durch die nachträgliche Vernetzung wird das Isolationsmaterial langzeitstabil in seiner Position fixiert, da die Kautschukmischung bei der Vernetzung vom plastischen in den elastischen Zustand übergeht. Man erhält ein elastomeres Isolationsbauteil, welches auch nach der Demontage an gleicher Stelle oder an anderer Stelle bei einem gleich ausgebildeten, zu isolierenden Bauteil wiederverwendet werden kann.

Gemäß einer vorteilhaften Weiterbildung der Erfindung weist die Kautschukmischung des Isolationsmaterials eine Mooney-Viskosität ML(1+4) bei 23 °C bestimmt gemäß DIM 53523 Teil 3 von 5 bis 30 ME auf. Bei diesen Viskositätswerten können auch komplizierte und komplexe Bauteilgeometrien, wie z. B. Ventile, Wärmetauscher oder Rohrleitungssysteme, besonders vorteilhaft vollständig mit dem Isolationsmaterial umhüllt und auch Hinterschnitte ausgefüllt werden. Das Isolationsmaterial kann auch in kleinste Öffnungen und Hinterschnitte hineingedrückt werden.

Um die thermischen oder auch akustischen Isolationseigenschaften zu verbessern, ist es von Vorteil, wenn die Kautschukmischung eine Porenstruktur aufweist. Diese Porenstruktur kann durch den Einsatz von chemischen Treibmitteln oder Mikrokugeln erfolgen, die in die Kautschukmischung eingemischt sind. Als Treibmittel können sowohl anorganische sowie organische Verbindungen eingesetzt werden. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Teilweise gibt es sie in expandierbarer Form, wobei sie mit einem Treibmittel gefüllt sind und sich beim Erwärmen ausdehnen, oder in vorexpandierter Form; die Ausdehnung ist hier schon abgeschlossen. Derartige Mikrokugeln werden z. B. unter dem Namen Expancel^{®} von der Firma Akzo Nobel vertrieben.

Das Isolationsmaterial basiert auf einer hochtemperaturbeständigen Kautschukmischung. Als Kautschuke können dabei z. B. Silikonkautschuk, hydrierter Nitrilkautschuk (HNBR), Fluorkautschuk, Acrylatkautschuk, Ethylen-Acrylat-Co- und Terpolymere, Ethylen-Propylen-Dienkautschuk, Epichlorhydrinkautschuk und Verschnitte aus diesen eingesetzt werden. Vorzugsweise basiert die Kautschukmischung auf Silikonkautschuk, da dieser Kautschuk eine besonders hohe Temperaturbeständigkeit, plastische Verformbarkeit und eine gewisse Klebrigkeit aufweist. Eine Isolation bei Temperaturen von mehr als 150 °C kann damit gut bewerkstelligt werden. Bevorzugt werden HTV-Typen, die sowohl peroxidisch vernetzbar als auch additionsvernetzbar sein können. Der Silikonkautschuk kann auch als Vormischung aus Polymer, Füllstoff und Öl, wie auf dem Markt üblich, eingesetzt werden.

Die Kautschukmischung des Isolationsmaterials kann weitere übliche Bestandteile, wie Öle, Alterungsschutz- und Flammschutzmittel, Füllstoffe, Farbpigment, chemische Treibmittel usw. enthalten.

Das Isolationsmaterial lässt sich nach dem Fachmann bekannten Verfahren herstellen, wobei eine Kautschukmischung mit allen benötigten Zuschlagstoffen mit üblichen Mischwerkzeugen erzeugt wird.

Anhand eines Ausführungsbeispiels soll die Erfindung näher erläutert werden, ohne dabei auf dieses beschränkt zu sein.

Es wurde eine auf Silikonkautschuk basierende Kautschukmischung 1 mit der in Tabelle 1 dargestellten Zusammensetzung hergestellt. Die zweite Spalte der Tabelle gibt mögliche Mengenbereiche für ein Isolationsmaterial auf der Basis von Silikonkautschuk an. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Ferner wurde die Mooney-Viskosität der Mischung gemäß DIN 53523 Teil 3 bei 23 °C nach 7 Tagen gemessen.

**Tabelle 1**

| Substanz | Mischung 1 | mögliche Mengenbereiche |
|---|---|---|
| Silikonkautschuk^{a} | 100 | 100 |
| Hitzestabilisatoren | 0,56 | 0 - 6 |
| Flammschutzmittel^{b} | 2,41 | 0 - 6 |
| Verarbeitungshilfsmittel | 0,74 | 0 - 3 |
| Peroxidvernetzer | 2,04 | 1 - 4 |
| Silikonöl | 12,99 | 2 - 20 |
| vorexpandierte Mikrokugeln^{c} | 5,57 | 2 - 15 |
| Pigmentpräparation^{d} | 9,28 | 0 - 12 |
| Mooney-Viskosität ML(1+4) bei 23 °C | 7 ME | 5 - 30 ME |

| | | |
|---|---|---|
| ^{a}Elastosil^{®} R 401/30 S, Wacker Chemie AG, Deutschland für Mischung 1, Elastosil^{®} R 420/50 S, Wacker Chemie AG, Deutschland für Mischung 2 ^{b}Elastosil^{®} Aux Batch SB2, Wacker Chemie AG, Deutschland ^{c}Expancel^{®} 920 DE 40 d30, Akzo Nobel N. V., Niederlande ^{d}Elastosil^{®} Farbpaste PT Schwarz Standard, Wacker Chemie AG, Deutschland | | |

Das Isolationsmaterial der Mischung 1 zeichnet sich durch eine gleichmäßige geschlossene Porenstruktur durch die Verwendung von vorexpandierten Mikrokugeln aus. Es zeigt eine Wärmeleitfähigkeit von ≤ 0,1 W/(m*K) und weist daher gute Isolationseigenschaften auf.

Das Isolationsmaterial wurde in zwei Halbschalen gegeben, welche um ein zu isolierendes Ventil gelegt wurden. Mit Hilfe einer manuellen Presse wurde das Isolationsmaterial um das Ventil gepresst und im Anschluss die Halbschalen wieder abgenommen. Das Ventil war vollständig von dem Isolationsmaterial umhüllt. Die Oberfläche des Isolationsmaterials war glatt und erweckte einen optisch ansprechenden Eindruck. So ließ sich auf einfache und kostengünstige Weise ein komplexes Bauteil, welches von Medien mit einer Temperatur von mehr als 150 °C durchflossen wird, isolieren.

## Patentansprüche

1. Verfahren zur Isolation von Bauteilen mit einem flexiblen Isolationsmaterial auf der Basis einer hochtemperaturbeständigen Kautschukmischung, die zumindest teilweise unvernetzt und plastisch verformbar ist, **dadurch gekennzeichnet, dass** das Isolationsmaterial auf das zu isolierende Bauteil durch Verpressen in einer Pressvorrichtung mit Hilfe einer Form aufgebracht wird.

2. Verfahren nach Anspruch 1, **dadurch gekennzeichnet, dass** die Pressvorrichtung manuell betrieben wird.

3. Verfahren nach Anspruch 1, **dadurch gekennzeichnet, dass** die Pressvorrichtung maschinell betrieben wird.

4. Verfahren nach zumindest einem der vorhergehenden Ansprüche, **dadurch gekennzeichnet, dass** die Pressvorrichtung stationär angeordnet ist.

5. Verfahren nach zumindest einem der vorhergehenden Ansprüche 1 bis 3, **dadurch gekennzeichnet, dass** es sich um eine mobile Pressvorrichtung handelt.

6. Verfahren nach zumindest einem der vorhergehenden Ansprüche, **dadurch gekennzeichnet, dass** die Form am zu isolierenden Bauteil verbleibt.

7. Verfahren nach zumindest einem der vorhergehenden Ansprüche 1 bis 5, **dadurch gekennzeichnet, dass** die Form mehrfach verwendet wird.

8. Verfahren nach zumindest einem der vorhergehenden Ansprüche, **dadurch gekennzeichnet, dass** das Isolationsmaterial nach dem Verpressen durch die Einwirkung von Wärmeenergie vernetzt bzw. weiter vernetzt wird, wobei die Wärmenergie durch die Temperierung der Form und/oder des isolierten Bauteils eingetragen wird.

9. Verfahren nach zumindest einem der vorhergehenden Ansprüche, **dadurch gekennzeichnet, dass** die Kautschukmischung des Isolationsmaterials eine Mooney-Viskosität ML(1+4) bei 23 °C bestimmt gemäß DIN 53523 Teil 3 von 5 bis 30 ME aufweist.

10. Verfahren nach zumindest einem der vorhergehenden Ansprüche, **dadurch gekennzeichnet, dass** die Kautschukmischung des Isolationsmaterials eine Porenstruktur aufweist.

11. Verfahren nach zumindest einem der vorhergehenden Ansprüche, **dadurch gekennzeichnet, dass** die Kautschukmischung des Isolationsmaterials auf Silikonkautschuk basiert.

## Claims

1. Method for insulating components with a flexible insulation material on the basis of a high-temperature-resistant rubber mixture, which is at least partially uncrosslinked and plastically deformable, **characterized in that** the insulation material is applied to the component to be insulated by pressing in a pressing device with the aid of a mould.

2. Method according to Claim 1, **characterized in that** the pressing device is operated manually.

3. Method according to Claim 1, **characterized in that** the pressing device is operated by machine.

4. Method according to at least one of the preceding claims, **characterized in that** the pressing device is arranged in a stationary manner.

5. Method according to at least one of the preceding Claims 1 to 3, **characterized in that** it is a mobile pressing device.

6. Method according to at least one of the preceding claims, **characterized in that** the mould remains on the component to be insulated.

7. Method according to at least one of the preceding Claims 1 to 5, **characterized in that** the mould is used repeatedly.

8. Method according to at least one of the preceding claims, **characterized in that**, after pressing, the insulation material is crosslinked or further crosslinked by the action of thermal energy, the thermal energy being introduced by the temperature control of the mould and/or of the insulated component.

9. Method according to at least one of the preceding claims, **characterized in that** the rubber mixture of the insulation material has a Mooney viscosity ML(1+4) at 23°C, determined in accordance with DIN 53523 Part 3, of 5 to 30 MU.

10. Method according to at least one of the preceding claims, **characterized in that** the rubber mixture of the insulation material has a pore structure.

11. Method according to at least one of the preceding claims, **characterized in that** the rubber mixture of the insulation material is based on silicone rubber.

## Revendications

1. Procédé d'isolation de composants à l'aide d'un matériau isolant souple à base d'un mélange de caoutchouc résistant à haute température, qui est déformable au moins partiellement de façon non réticulée et plastique, **caractérisé en ce que** l'on dépose le matériau isolant sur le composant à isoler par pressage dans un dispositif de pressage à l'aide d'un moule.

2. Procédé selon la revendication 1, **caractérisé en ce que** l'on actionne manuellement le dispositif de pressage.

3. Procédé selon la revendication 1, **caractérisé en ce que** l'on actionne à la machine le dispositif de pressage.

4. Procédé selon au moins une des revendications précédentes, **caractérisé en ce que** le dispositif de pressage est installé de façon stationnaire.

5. Procédé selon au moins une des revendications précédentes 1 à 3, **caractérisé en ce que** le dispositif de pressage est mobile.

6. Procédé selon au moins une des revendications précédentes, **caractérisé en ce que** le moule reste sur le composant à isoler.

7. Procédé selon au moins une des revendications précédentes 1 à 5, **caractérisé en ce que** l'on utilise le moule plusieurs fois.

8. Procédé selon au moins une des revendications précédentes, **caractérisé en ce que** l'on opère ou l'on poursuit la réticulation du matériau isolant après le pressage par l'action d'énergie thermique, l'énergie thermique étant fournie par l'équilibrage de la température du moule et/ou du composant isolé.

9. Procédé selon au moins une des revendications précédentes, **caractérisé en ce que** le mélange de caoutchouc du matériau isolant présente une viscosité Mooney ML(1+4) à 23°C, déterminée selon la norme DIN 53523 Partie 3, de 5 à 30 ME.

10. Procédé selon au moins une des revendications précédentes, **caractérisé en ce que** le mélange de caoutchouc du matériau isolant présente une structure poreuse.

11. Procédé selon au moins une des revendications précédentes, **caractérisé en ce que** le mélange de caoutchouc du matériau isolant est basé sur du caoutchouc silicone.
